# EUROPEAN PATENT APPLICATION

(11) **EP 4 366 071 A1**
(43) Date of publication of application: **08.05.2024**
(21) Application number: 23825357.9
(22) Date of filing: 06.02.2023
(51) Int. Cl.: H01M 50/536

(54) **CURRENT COLLECTING COMPONENT, BATTERY, AND BATTERY MODULE**

(30) Priority: 29.09.2022 CN 202222598483 U; 23.09.2022 CN 202211166764
(71) Applicant: Xiamen Hithium Energy Storage Technology Co., Ltd., Xiamen, Fujian 361006 (CN)
(72) Inventor: XIONG, Yongfeng, Fujian 361006 (CN); XU, Weidong, Fujian 361006 (CN)
(74) Representative: Mewburn Ellis LLP
(86) International application number: PCT/CN2023/074497
(87) International publication number: WO 2024/060482

(57) **Abstract**

The present disclosure relates to a current collecting component (100), a battery and a battery module, includes a current collecting part, the current collecting part includes a current collecting region and at least one electrical connection region (111); and a connecting part, the connection part is connected with the current collecting region; wherein a thickness of the current collecting region is greater than a thickness of the electrical connection region (111).

## Description

### CROSS-REFERENCE TO RELATED APPLICATIONS

The present disclosure claims priority benefits to Chinese Patent Application No. 2022225984832, entitled as "battery module, battery and current collecting component", filed September 29, 2022, and Chinese Patent Application No. 2022111667649, entitled as "current collecting component and battery", filed September 23, 2022, the contents of which are incorporated herein by reference.

### TECHNICAL FIELD

The present disclosure relates to a technical field of battery, and in particular to a current collecting component, a battery, and a battery module.

### BACKGROUND

In recent years, the new energy vehicle industry has received unprecedented development opportunities, and an important factor affecting the performance indicators, such as usage performance, endurance time, of new energy vehicles, is the usage performance and reliability of a battery of the new energy vehicle. The main components of the battery include a housing, an end cover assembly, a current collecting component, an electrode assembly, etc. The current collecting component is configured to connect the end cover assembly and electrode tabs of the electrode assembly to achieve current conduction.

In the battery production process, in order to ensure the welding machinability between the current collecting component and the electrode assembly, the current collecting component needs to have a certain overcurrent capacity, however, due to the limited internal space of the battery, the thickness of the current collecting component is usually put forward certain requirements. But in fact, when the thickness of the current collecting component increases, the required welding power will be higher, which will not only affect the efficiency of welding processing to a certain extent, but also increase the cost of welding processing.

### SUMMARY

Based on such, it is necessary to provide a current collecting component, a battery and a battery module, aiming to solve the problem of high cost and low processing efficiency caused by large energy consumption in traditional technology processing.

In one aspect, the present disclosure provides a current collecting component including:
a current collecting part including a current collecting region and at least one electrical connection region; and
a connection part connected with the current collecting region;
wherein a thickness of the current collecting region is greater than a thickness of the electrical connection region.

During the processing and installation of the current collecting component in the above technical solution, the connecting part can be connected with the current collecting part as an integrated structure via the current collecting region, and due to the thickness of the current collecting region is greater than the thickness of the electrical connection region, the electrical connection region with a smaller thickness is not only convenient for welding with the electrode assembly, but also only require lower welding power during welding processing, which helps to reduce processing costs and energy consumption, and improve the processing efficiency, and at the same time, the larger thickness of the current collecting region can well carry the large current from the electrical connection region, so that the current collecting component have a certain overcurrent capacity. In other words, the current collecting component of the above technical solution have better machinability and the overall thickness design is more optimized, which can meet the requirements of battery installation with limited internal space.

The technical solution of this application is further explained below:
In one embodiment, the current collecting part comprises two electrical connection regions, the two electrical connection regions are connected to each other via the current collecting region. Further, the thickness of the current collecting region is more than twice the thickness of the electrical connecting region, due to two electrical connection regions are provided and the two electrical connection regions are connected to each other via the current collecting region, thus, the two electrical connection regions are connected in parallel between the current collecting region and the electrode assembly when the two electrical connection regions are connected to the electrode assembly respectively, and since the thickness of the current collecting region is more than twice the thickness of one electrical connection region, the thicker current collecting region is capable of carrying the current from the two electrical connection regions.

In some embodiments, the current collecting component comprises a first current collecting part and a second current collecting part stacked together, and the current collecting part comprises a first connection region, a first current collecting subregion and two electrical connection regions, the two electrical connection regions are connected to each other via the first current collecting subregion. The second current collecting part comprises a second connection region and a second current collecting subregion, the first connection region is electrically connected with the second connection region to form the connection part, and the first current collecting subregion is electrically connected with the second current collecting subregion to form the current collecting region.

In one embodiment, the second current collecting subregion is not overlapped with the electrical connection region if viewed from the thickness direction of the current collecting component.

In one embodiment, the first current collecting subregion is welded to the second current collecting subregion, and the first connection region is welded to the second connection region.

In one embodiment, the first connection region, the first current collecting subregion, the two electrical connection regions, the second connection region, and the second current collecting subregion have the same thickness.

In one embodiment, in the extension direction of the connection part, one end of the first connection region is connected to the first current collecting subregion, and one end of the second connection region is connected to the second current collecting subregion, and the first connection region and the second connection region both comprise at least one bending region. The at least one bending region of the first connection region overlaps with the at least one bending region of the second connection region if viewed from the thickness direction of the current collecting component.

In one embodiment, the first connection region and the second connection region both comprise a bending region, the bending region of the first connection region is connected to the first current collecting subregion, and the bending region of the second connection region is connected to the second current collecting subregion.

In one embodiment, the first connection region and the second connection region both comprise two or more bending regions, the two or more bending regions of the first connection region are arranged at intervals along the extension direction of the first connection region, and the two or more bending regions of the second connection region are arranged at intervals along the extension direction of the second connection region. One of the two or more bending regions of the first connection region is connected to the first current collecting subregion, and one of the two or more bending regions of the second connection region is connected to the second current collecting subregion.

In another aspect, the present disclosure provides a battery, including:
a housing having an opening;
an electrode assembly accommodated in the housing; and
the current collecting component described above, the current collecting component is accommodated in the housing, at least one electrical connection region of the current collecting component is electrical connected with the electrode assembly.

In one embodiment, the at least one electrical connection region comprises a protrusion protruding toward the electrode assembly.

In addition, the present disclosure also provides a battery, comprising:
a housing has an opening;
an electrode assembly accommodated in the housing; and
the current collecting component described above, the current collecting component is accommodated in the housing, two electrical connection regions of the current collecting component are electrical connected with the electrode assembly.

In one embodiment, the two electrical connection regions both comprise a protrusion protruding toward the electrode assembly.

In one embodiment, the second current collecting subregion is located on a surface, of the first current collecting subregion, away from the electrode assembly along the thickness direction of the collector component.

In one embodiment, the second current collecting subregion is located a surface, of the first current collecting subregion, towards the electrode assembly along the thickness direction of the current collecting component, and the height of the protrusion is greater than the thickness of the second current collecting subregion.

In one embodiment, the battery also comprises an end cover assembly for sealing the opening, the end cover assembly comprises a terminal, and the terminal is electrically connected to the connecting part.

In one embodiment, the current collecting component is configured as a positive current collecting component, the terminal is configured as the positive terminal, and the current collecting component is located between the terminal and the electrode assembly.

The thickness of the current collecting region is 0.4mm to 0.7mm, the thickness of the electrical connection region is 0.3mm to 0.4mm, and the thickness difference between the current collecting region and the electrical connection region is between 0.1 mm and 0.4 mm.

In one embodiment, the current collecting component is configured as a negative current collecting component, the terminal is configured as the negative terminal, and the current collecting component is located between the terminal and the electrode assembly;

The thickness of the current collecting region is 0.4 mm to 0.5 mm, the thickness of the electrical connection region is 0.2 mm to 0.3 mm, and the thickness difference between the current collecting region and the electrical connection region is between 0.1 mm and 0.3 mm.

In a further aspect, the present disclosure provides a battery module, which includes the battery described above.

Details of one or more embodiments of the present disclosure are presented in the attached drawings and descriptions below. Other features, purposes, and advantages of the present disclosure will become apparent from the specification, drawings, and claims.

### BRIEF DESCRIPTION OF THE ACCOMPANYING DRAWINGS

In order to better describe and illustrate embodiments and/or examples of the present disclosure, reference may be made to one or more attached drawings. Additional details or examples used to describe the drawings should not be considered as limiting the scope of any of the present disclosure, currently described embodiments and/or examples, and currently understood best modes of these disclosure.
FIG. 1 illustrates an assembly structural view of the current collecting component in accordance with one embodiment of the present disclosure;
FIG. 2 illustrates an explosion structural view of FIG. 1;
FIG. 3 illustrates a structural view of a first current collecting part as shown in one view angle;
FIG. 4 illustrates a structural view of the first current collecting part as shown in another view angle;
FIG. 5 illustrates a partially enlarged view of part A shown in FIG. 2.
FIG. 6 illustrates an isometric view of a cylindrical battery in accordance with one embodiment of the present disclosure.
FIG. 7 illustrates a top view of FIG. 6;
FIG. 8 illustrates a cross-sectional structural viewat B-B shown in FIG. 7.

The description of reference signs:
100: current collecting component; 10: first current collecting part; 11: first current collecting subregion; 111: first notch; 12: first connection region; 122: third notch; 123: bending region; 13: electrical connection region; 131: protrusion; 20: second current collecting part; 21: second current collecting subregion; 211: second notch; 22: second connection region; 222: fourth notch; 101: adaptive notch; 102: fool-proofing notch; 200: cylindrical battery; 210: housing; 220: end cover assembly; 221: terminal; 230: electrode assembly; H1: first thickness; H2: second thickness.

### DETAILED DESCRIPTION OF ILLUSTRATED EMBODIMENTS

The technical solutions in the embodiments of the present disclosure will be clearly and completely described below with reference to the accompanying drawings in the embodiments of the present disclosure. A better embodiment of present disclosure is provided in the attached figures. However, the present disclosure may be implemented in many different forms and is not limited to the embodiments described herein. It should be understood that these embodiments are provided for the purpose of providing a more thorough understanding of the contents of the present disclosure .

In addition, the terms "first" and "second" are used for descriptive purposes only and are not to be understood as indicating or implying relative importance or as implicitly indicating the number or sequence of technical features indicated. Thus, a feature defined as "first" or "second" may explicitly or implicitly includes at least one of the features. In the description of this application, "multiple" means at least two, such as two, three, etc., unless otherwise expressly specified.

Unless otherwise defined, all technical and scientific terms used herein have the same meaning as those normally understood by skilled persons belonging to the technical field of present disclosure. The terms used herein in the specification of present disclosure are for the purpose of describing specific embodiments only and are not intended to restrict present disclosure.

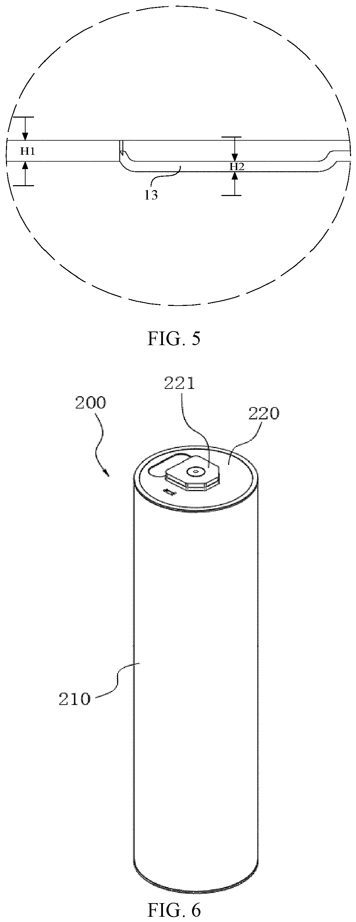

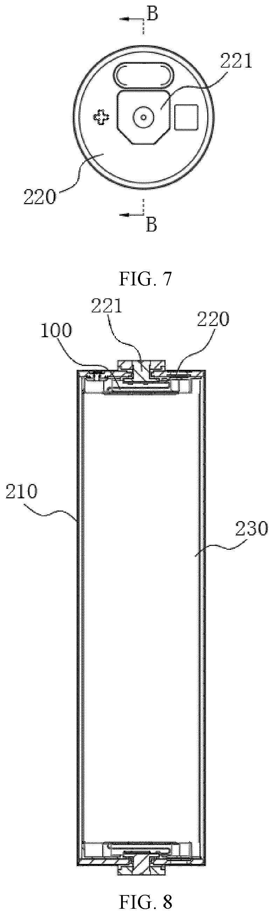

As shown in Fig. 6 to Fig. 8, the embodiments of the present disclosure provides a battery, which specifically can be a cylindrical battery 200. The cylindrical battery 200 includes an end cover assembly 220, a housing 210, an electrode assembly 230 and electrolyte. The housing 210 is provided with an opening and an accommodating cavity connected with each other, the electrolyte is infiltrated in the electrode assembly 230 during installation, and then the electrode assembly 230 is loaded into the accommodating cavity through the opening, and then the end cover assembly 220 is seal installed on the opening, so that the cylindrical battery 200 being encapsulated can be obtained.

It is necessary to note that, the cylinder battery 200 in fact also includes other components, such as explosion-proof valves, etc., because they have low correlation with the technical solution of present disclosure, so they are not introduced and described here.

The electrode assembly 230 includes a positive electrode tab and a negative electrode tab; the end cover assembly 220 covers the opening of the housing 210, and a positive current collecting component is connected with the positive positive electrode tab, and a negative current collecting component is connected with the negative electrode tab.

The end cover assembly 220 includes a top cover body on which a positive terminal and a negative terminal are arranged at intervals; a current collecting component 100 comprises the positive current collecting part and the negative current collecting part. The positive current collecting component is connected to the positive terminal, and the negative current collecting component is connected to the negative terminal.

The electrode assembly 230 is composed of a positive electrode plate, a negative electrode plate and a diaphragm. The battery works mainly by moving metal ions between the positive electrode plate and the negative electrode plate. The positive electrode plate comprises a positive current collector and a positive active material layer, the positive active material layer is coated on a surface of the positive current collector, the positive current collector that is not coated with the positive active material layer protrudes from the positive current collector that is coated with the positive active material layer, and the positive current collector that is not coated with the positive active material layer is used as the positive electrode tab.

Taking a lithium-ion battery as an example, the material of the positive current collector can be aluminum, and the positive active material can be lithium cobaltate, lithium iron phosphate, ternary lithium or lithium manganate, etc. The negative electrode plate includes a negative current collector and a negative active material layer, the negative active material layer is coated on a surface of the negative current collector, the positive current collector that is not coated with the negative active material layer protrudes from the positive current collector that is coated with the negative active material layer, and the positive current collector that is not coated with the negative active material layer is used as the negative electrode tab. The material of the negative current collector can be copper, and the negative active material can be carbon or silicon. In order to ensure that no fusing occurs when flowing through a large current, the number of positive electrode tab is multiple and stacked together, and the number of the positive electrode tab is multiple and stacked together.

The material of the diaphragm can be PP(polypropylene, polypropylene) or PE(polyethylene, polyethylene). In addition, the electrode assembly 230 may have a winding structure or a laminated structure, to which the embodiments of the present disclosure is not limited.

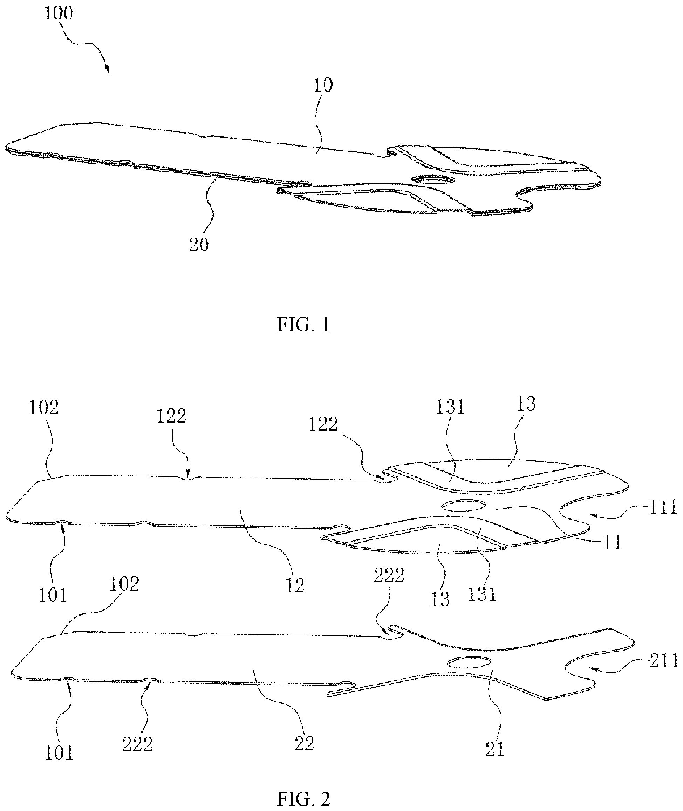

In particular, as shown in Figs. 1 and 2, the current collecting component 100 is illustrated in one embodiment of present disclosure, the current collecting component 100 includes a current collecting part and a connection part. The current collecting part includes a current collecting region and at least one electrical connection region 13; the connection part is connected with the current collecting region; a thickness of the current collecting region is greater than a thickness of the electrical connection region 13.

In summary, the implementation of the technical solution of this embodiment will have the following beneficial effects: during the processing and installation of the current collecting component 100 in the above technical solution, the connection part can be connected with the current collecting part as an integrated structure via the current collecting region, and due to the thickness of the current collecting region is greater than the thickness of the electrical connection region 13, the electrical connection region 13 with a smaller thickness is not only convenient for welding with the electrode assembly 230, and the requirement of welding power during welding processing is also lower, which helps to reduce processing costs and energy consumption, and improve the processing efficiency, and at the same time, the larger thickness of the current collecting region can well carry the large current from the electrical connection region 13 (namely the large current caused by the upsizing of the cylinder battery 200), so that the current collecting component 100 have a certain overcurrent capacity. In other words, the current collecting component 100 of the above technical solution have better machinability and the overall thickness design is more optimized, which can meet the requirements of battery installation with limited internal space.

Alternatively, the current collecting part includes two electrical connection regions 13, the two electrical connection regions 13 are connected to each other via the current collecting region. Further, the thickness of the current collecting region is more than twice the thickness of the electrical connection region 13, due to two electrical connection regions 13 are provided and the two electrical connection regions 13 are connected to each other via the current collecting region, thus, the two electrical connection regions 13 are connected in parallel between the current collecting region and the electrode assembly 230 when the two electrical connection regions 13 are connected to the electrode assembly 230 respectively, and since the thickness of the current collecting region is more than twice the thickness of one electrical connection region 13, the thicker current collecting region is capable of carrying the current from the two electrical connection regions 13.

In some embodiments, the current collecting component 100 includes a first current collecting part 10 and a second current collecting part 20 stacked together, and the first current collecting part 10 includes a first connection region 12, a first current collecting subregion 11 and two electrical connection regions 13, the two electrical connection regions 13 are connected to each other via the first current collecting subregion 11. The second current collecting part 20 includes a second connection region 22 and a second current collecting subregion 21, the first connection region 12 is electrically connected with the second connection region 22 to form the connection part, and the first current collecting subregion 11 is electrically connected with the second current collecting subregion 21 to form the current collecting region.

Therefore, the total thickness of the first current collecting subregion 11 and the second current collecting subregion 21 stacked together can be greater than the thickness of the electrical connection region 13, so as to realize the thickness difference design of the current collecting component 100, and meet the requirements of welding the electrical connection region 13 and the electrode assembly 230 with small welding power, and increase the thickness of the current collecting region to enable the current collecting component 100 to obtain the overcurrent capacity.

It should be noted that, the number of the second current collecting part 20 can be two or more, and the second current collecting parts 20 can be all stacked and welded on the same side of the first current collecting part 10, or can be stacked and welded on the opposite two sides of the first current collecting part 10 respectively, which can be selected according to actual needs.

Further, the first connection region 12, the first current collecting subregion 11, the two electrical connection regions 13, the second connection region 22, and the second current collecting subregion 21 have the same thickness. Uniform thickness design to ensure the uniformity of the machinability and mechanical properties.

It is understood that the electrical connection region 13 can be integrated formed by the first current collecting subregion 11 via stamping and other methods, or it can be assembled and fixed on the first current collecting subregion 11 via a detachable way.

In this embodiment, the electrical connection region 13 is formed by stamping process on the first current collecting subregion 11 preferentially, which can ensure better structural integrity.

It should be noted that, when viewed from the thickness direction of the current collecting component 100, the second current collecting subregion 21 is not overlapped with the electrical connection region 13. In this way, the second current collecting subregion 21 can avoid blocking the electrical connection region 13.

In addition, on the basis of any of the above embodiments, the second connection region 22 is stacked with the first connection region 12, and the second connection region 22 is electrically connected with the first connection region 12. This can further improve the integrity and reliability of the connection between the first current collecting part 10 and the second current collecting part 20.

Alternatively, in present disclosure, the second current collecting subregion 21 is welded to the first current collecting subregion 11, and the second connection region 22 is welded to the first connection region 12. Thus to ensure higher connection strength and to optimize mechanical properties. Alternatively, the welding method can be connected and fixed by any of the methods of ultrasonic welding, resistance welding, laser welding, etc.

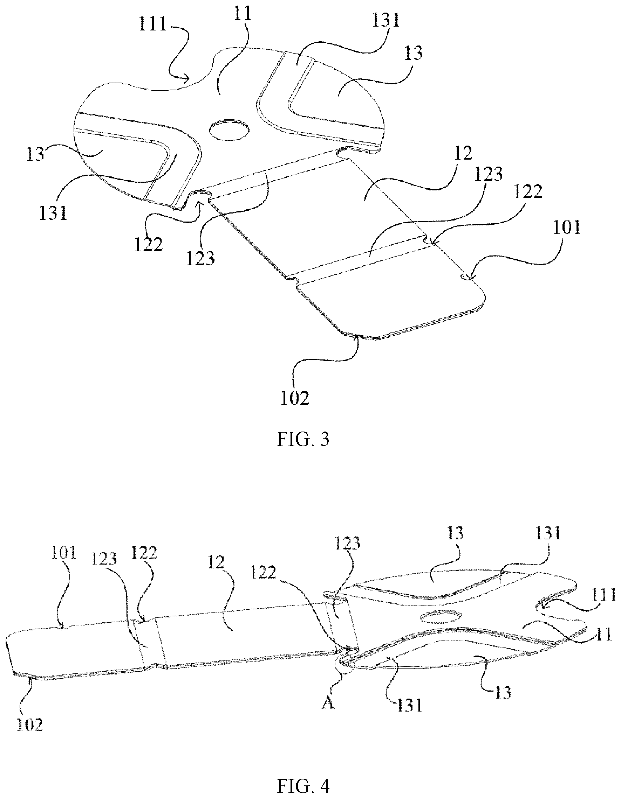

Please continue to refer to Figs. 3 and 4, in the extension direction of the connection part, one end of the first connection region 12 is connected to the first current collecting subregion 11, and one end of the second connection region 22 is connected to the second current collecting subregion 21, and the first connection region 12 and the second connection region 22 both include at least one bending region 123. when viewed from the thickness direction of the current collecting component 100, the at least one bending region 123 of the first connection region 12 overlaps with the at least one bending region 123 of the second connection region 22. Therefore, the first connection region 12 and the second connection region 22 can be bent in the same direction through the bending region 123 to obtain the elastic force, so as to ensure the reliable contact between the connection part and the terminal 221 arranged on the end cover assembly 220 during installation.

For example, the first connection region 12 and the second connection region 22 both include a bending region 123, the bending region 123 of the first connection region 12 is connected to the first current collecting subregion 11, and the bending region 123 of the second connection region 22 is connected to the second current collecting subregion 21.

Alternatively, the first connection region 12 and the second connection region 22 both include two or more bending regions 123, the two or more bending regions 123 of the first connection region 12 are arranged at intervals along the extension direction of the first connection region 12, and the two or more bending regions 123 of the second connection region 22 are arranged at intervals along the extension direction of the second connection region 22. One of the two or more bending regions 123 of the first connection region 12 is connected to the first current collecting subregion 11, and one of the two or more bending regions 123 of the second connection region 22 is connected to the second current collecting subregion 21.

In detail, the bending region 123 may be a concave or crease line located on the first connection region 12 and the second connection region 22. The first connection region 12 can be folded or bent with respect to the first current collecting subregion 11 through the bending region 123, and the second connection region 22 can also be folded or bent with respect to the second current collecting subregion 21 through the bending region 123. Alternatively, the first connection region 12 and the second connection region 22 are folded or bent themselves via the bending region 123 . In this way, the first connection region 12 and the second connection region 22 will have a certain elasticity after bending, so as to ensure that the connection part is fully connected or contradicted with the terminal 221 of the battery under the action of its own elasticity.

Further, by adjusting the number of bending regions 123 arranged on the first connection region 12 and the second connection region 22, the bending times of the first connection region 12 and the second connection region 22 can be adjusted. As the bending times of the first connection region 12 and the second connection region 22 change, the elasticity of the first connection region 12 and the second connection region 22 after bending also changes accordingly (for example, the elasticity is increased).

Further, when there are more than two bending regions 123, the two or more bending regions 123 are arranged from the connection position between the first connection region 12 and the first current collecting subregion 11 and the connection position between the second connection region 22 and the second current collecting subregion 21 and are arranged at intervals along the extension directions of the second connection region 22. Specifically, the above embodiment is more convenient for the first connection region 12 and the second connection region 22 to bend from the connection, so that the difficulty of bending operation is reduced. At the same time, the bending method can also reserve sufficient bending space for the first current collecting subregion 11 and the first connection region 12 and the second current collecting subregion 21 and the second connection region 22, thus to avoid interference during bending.

Further, in the width direction of the first connection region 12, at least one end of the bending region 123 is provided with a third notch 122, and the width direction of the first connection region 12 is perpendicular to the extension direction of the first connection region 12. The first connection region 12 can be easily and smoothly bent along the bending region 123.

On the basis of the above embodiments, the first current collecting subregion 11 is provided with a first notch 111, and the second current collecting subregion 21 is provided with a second notch 211 and the shape and position of the second notch 211 is compatible with the shape and position of the first notch 111. The first notch 111 is arranged to evade the explosion-proof valve to avoid installation interference between the current collecting component 100 and the explosion-proof valve. The second notch 211 makes the second current collecting subregion 21 easier to fold.

Further, the first connection region 12 is provided with at least one third notch 122, and the second connection region 22 is provided with at least one fourth notch 222, the at least one fourth notch 222 is compatible with the shape and position of the third notch 122. The design of the third notch 122 and the fourth notch 222 makes the first connection region 12 and the second connection region 22 easier to be bent in the same direction with the same amplitude, thus reducing the bending difficulty and improving the manufacturability.

In some embodiments, a battery is provided and the battery includes: a housing 210 having an opening; an electrode assembly 230 accommodated in housing 210; and the current collecting component 100, the current collecting component 100 is accommodated in the housing 210, and the at least one electrical connection region 13 is electrically connected with the electrode assembly 230.

Further, the at least one electrical connection region 13 includes a protrusion protruding toward the electrode assembly 230, therefore, the protrusion is convenient for welding with the electrode assembly 230, and the welding region is small, which is conducive to reducing the welding power and energy consumption.

Alternatively, as an alternative to the above embodiments, in other embodiments, two electrical connection regions 13 both are electrically connected to the electrode assembly 230. The two electrical connection regions 13 both include the protrusion protruding toward the electrode assembly 230. In this way, the welding strength and connection reliability between the current collecting component 100 and the electrode assembly 230 are improved.

In addition, on the basis of the above embodiments, the two protrusions are formed as curved bending structures and are arranged symmetrically at intervals. By welding the two symmetrical protrusions, designed as curved bending structure, with the electrode assembly 230, which can ensure that the electrode assembly 230 and current collecting component 100 are welded more stably, and also can ensure that each layer of electrode assembly 230 has the same current.

In further embodiments, the second current collecting subregion 21 is located on a surface, of the first current collecting subregion 11, away from the electrode assembly 230 along the thickness direction of the current collecting component 100. In this way, the electrical connection region 13 and the second current collecting subregion 21 are located on two different sides of the first current collecting subregion 11, the second current collecting part 20 and the first current collecting part 10 can be normally connected as one body, and the second current collecting part 20 will not interfere with the welding process of the electrical connection region 13 and the electrode assembly 230. The thickness of the electrical connection region 13 is designed to be small, so that it can be effectively connected to the electrode assembly 230, and the space is saved.

Alternatively, as an alternative to the above mentioned embodiments, the second current collecting subregion 21 is located a surface, of the first current collecting subregion 11, towards the electrode assembly 230 along the thickness direction of the current collecting component 100, and the height of the protrusion is greater than the thickness of the second current collecting subregion 21. Therefore, the second current collecting subregion 21 will not interfere with the normal welding between the protrusion (that is, the electrical connection region 13) and the electrode assembly 230.

Alternatively, a top surface of the protrusion is planar. Therefore, when the protrusion is welded with the electrode assembly 230 via the top surface, the contact region is large, the welding connection is reliable, and the flatness between the current collecting component 100 and the electrode assembly 230 can be ensured.

In some embodiments, the first connection region 12 and the second connection region 22 both are further provided with adaptation notches 101. The terminal 221 is installed via the end cover assembly 220, and the end cover assembly 220 also includes a lower plastic, the first current collecting part 10 is installed with the lower plastic, the lower plastic is provided with an installation structure for installing the first flow assembly 10, therefore, by setting the adaptation notches 101 on the first connection region 12 and the second connection region 22, it can more effectively ensure the assembly effect of the first current collecting part 10 and the lower plastic.

Further, in some other embodiments, the ends of the first connection region 12 and the second connection region 22 are provided with fool-proofing notches 102, such that the first connection region 12 and the first current collecting subregion 11, and the second connection region 22 and the second current collecting subregion 21 form an asymmetric structure, so that the fool-proofing function can be provided when the current collecting component 100 is installed.

In addition, the battery also includes the end cover assembly 220 for sealing the opening, the end cover assembly 220 includes the terminal 221, and the terminal 221 is electrically connected to the connection part.

In the present disclosure, the thickness of the current collecting region is set as H1, and the thickness of the electric connection region 13 is set as H2.

In some embodiments, the current collecting component 100 is configured as a positive current collecting component, the terminal 221 is configured as the positive terminal, and the current collecting component 100 is located between the terminal 221 and the electrode assembly 230; the thickness of the current collecting region is 0.4 mm to 0.7 mm, the thickness of the electrical connection region 13 is 0.3 mm to 0.4 mm, and the thickness difference between the current collecting region and the electrical connection region 13 is 0.1 mm to 0.4 mm. The above embodiments can fully ensure the installation effect of the current collecting component 100 in the battery. Due to the thickness of the current collecting region of the positive current collecting component is limited as 0.4mm to 0.7mm, and the thickness of the electric connection region 13 is limited as 0.3 mm to 0.4mm, when determining the thickness, it can ensure that there is at least 0.1 mm thickness difference (that is, the thickness difference between the current collecting region and the electrical connection region 13 is between 0.1 mm and 0.4 mm) to avoid the thickness of the current collecting region and the electric connection region 13 to be the same. In the above thickness range, the overcurrent capacity of the positive current collecting component can be effectively guaranteed, and the welding efficiency can be improved.

Alternatively, the current collecting component 100 is configured as the negative current collecting component, the terminal 221 is configured as the negative terminal, and the current collecting component 100 is located between the terminal 221 and the electrode assembly 230; the thickness of the current collecting region is 0.4 mm to 0.5 mm, the thickness of the electrical connection region 13 is 0.2 mm to 0.3 mm, and the thickness difference between the current collecting region and the electrical connection region 13 is 0.1 mm to 0.3 mm.

The thickness of the current collecting region of the negative current collecting component is limited as 0.4 mm to 0.5 mm, and the thickness of the electric connection region 13 is limited as 0.2 mm to 0.3 mm, when determining the thickness, it can ensure that there is at least 0.1 mm thickness difference (that is, the thickness difference between the current collecting region and the electrical connection region 13 is between 0.1 mm and 0.3 mm) to avoid the thickness of the current collecting region and the electric connection region 13 to be the same. In the above thickness range, the overcurrent capacity of the negative current collecting component can be effectively guaranteed, and the welding efficiency can be improved.

In addition to the above, the present disclosure further provides an electrical equipment comprising a battery module, the battery module includes the battery of any of the above embodiments.

The battery may include a lithium ion secondary battery, a lithium ion primary battery, a lithium sulfur battery, a sodium lithium ion battery, a sodium ion battery, or a magnesium ion battery, etc, the embodiments of this application are not limited to that. The battery may be cylindrical, flat, cuboid or other shapes, and the embodiments of the present disclosure are not limited to this. According to the way of packaging, the battery is generally classified as three types: cylindrical battery 200, square battery and soft pack battery.

The battery module referred in embodiments of the present disclosure means a single physical module comprising one or more cells to provide higher voltage and capacity. The battery module generally includes a housing for encapsulating one or more batteries, and the housing can prevent liquids or other foreign objects from affecting the charging or discharging of the battery.

The electrical equipment can be any suitable forms, such as mobile phones, portable devices, laptops, battery cars, electric vehicles, ships, spacecraft, electric toys and power tools, etc., for example, spacecraft includes aircraft, rockets, space shuttles and spacecraft, etc., electric toys includes stationary or mobile electric toys, for example, game consoles, electric car toys, electric ship toys and electric aircraft toys, etc., power tools includes metal cutting power tools, grinding power tools, assembly power tools and railway power tools, such as electric drills, electric grinding turbines, electric wrenches, electric screwdrivers, electric hammers, impact drills, concrete vibrators and planers.

The technical features of the above embodiments can be combined in any ways. For the sake of concise description, the above embodiments doe not describe all possible combinations of the technical features. However, as long as there is no contradiction in the combination of these technical features, they should be considered as the scope of this specification.

The above embodiments only express several embodiments of the present disclosure, and their descriptions are more specific and detailed, but they cannot be construed as limitations on the scope of the present disclosure. It should be noted that, for persons skilled in the art, without deviating from the concept of the present disclosure, a number of deformation and improvement can be made, which are within the scope of the present disclosure. Therefore, the scope of the present disclosure shall be subject to the attached claims, and the description and drawings can be configured to explain the content of the claims.

## Claims

1. A current collecting component, comprising:
a current collecting part comprising a current collecting region and at least one electrical connection region; and
a connection part connected with the current collecting region;
wherein a thickness of the current collecting region is greater than a thickness of the electrical connection region.

2. The current collecting component according to claim 1, wherein the current collecting part comprises two electrical connection regions, the two electrical connection regions are connected to each other via the current collecting region.

3. The current collecting component according to claim 2, wherein a thickness of the current collecting region is more than twice a thickness of the electrical connection region.

4. The current collecting component according to claim 2 or 3, wherein the current collecting component comprises a first current collecting part and a second current collecting part stacked together, and the first current collecting part comprises a first connection region, a first current collecting subregion and two electrical connection regions, the two electrical connection regions are connected to each other via the first current collecting subregion, the second current collecting part comprises a second connection region and a second current collecting subregion, the first connection region is electrically connected with the second connection region to form the connection part, and the first current collecting subregion is electrically connected with the second current collecting subregion to form the current collecting region.

5. The current collecting component according to claim 4, wherein the second current collecting subregion is not overlapped with the electrical connection region when viewed from a thickness direction of the current collecting component.

6. The current collecting component according to claim 4, wherein the first current collecting subregion is welded to the second current collecting subregion, and the first connection region is welded to the second connection region.

7. The current collecting component according to claim 4, wherein the first connection region, the first current collecting subregion, the two electrical connection regions, the second connection region, and the second current collecting subregion have a same thickness.

8. The current collecting component according to claim 4, wherein in the extension direction of the connection part, one end of the first connection region is connected to the first current collecting subregion, and one end of the second connection region is connected to the second current collecting subregion, and the first connection region and the second connection region both comprise at least one bending region, the at least one bending region of the first connection region overlaps with the at least one bending region of the second connection region when viewed from a thickness direction of the current collecting component.

9. The current collecting component according to claim 8, wherein the first connection region and the second connection region both comprise a bending region, the bending region of the first connection region is connected to the first current collecting subregion, and the bending region of the second connection region is connected to the second current collecting subregion.

10. The current collecting component according to claim 8, wherein the first connection region and the second connection region both comprise two or more bending regions, the two or more bending regions of the first connection region are arranged at intervals along the extension direction of the first connection region, and the two or more bending regions of the second connection region are arranged at intervals along the extension direction of the second connection region; one of the two or more bending regions of the first connection region is connected to the first current collecting subregion, and one of the two or more bending regions of the second connection region is connected to the second current collecting subregion.

11. A battery comprising:
a housing having an opening;
an electrode assembly accommodated in the housing; and
the current collecting component as claimed in any of claims 1 to 10, the current collecting component is accommodated in the housing, the at least one electrical connection region is electrical connected with the electrode assembly.

12. The battery according to claim 11, wherein the at least one electrical connection region comprises a protrusion protruding toward the electrode assembly.

13. A battery comprising:
a housing having an opening;
an electrode assembly accommodated in the housing; and
the current collecting component as claimed in any of claims 4 to 10, the current collecting component is accommodated in the housing, the two electrical connection regions are electrical connected with the electrode assembly.

14. The battery according to claim 13, wherein the two electrical connection regions both comprise a protrusion protruding toward the electrode assembly.

15. The battery according to claim 13 or 14, wherein the second current collecting subregion is located on a surface, of the first current collecting subregion, away from the electrode assembly along the thickness direction of the current collecting componentcollector component.

16. The battery according to claim 13 or 14, wherein the second current collecting subregion is located a surface, of the first current collecting subregion, towards the electrode assembly along the thickness direction of the current collecting component, and the height of the protrusion is greater than the thickness of the second current collecting subregion.

17. The battery according to any of claims 11 to 16, wherein the battery further comprises an end cover assembly for sealing the opening, the end cover assembly comprises a terminal, and the terminal is electrically connected to the connection part.

18. The battery according to claim 17, wherein the current collecting component is configured as a positive current collecting component, the terminal of the end cover assembly is configured as the positive terminal, and the current collecting component is located between the terminal and the electrode assembly;
the thickness of the current collecting region is 0.4mm to 0.7mm, the thickness of the electrical connection region is 0.3mm to 0.4mm, and a thickness difference between the current collecting region and the electrical connection region is between 0.1 mm and 0.4 mm.

19. The battery according to claim 17, wherein the current collecting component is configured as a negative current collecting component, the terminal of the end cover assembly is configured as the negative terminal, and the current collecting component is located between the terminal and the electrode assembly;
the thickness of the current collecting region is 0.4 mm to 0.5 mm, the thickness of the electrical connection region is 0.2 mm to 0.3 mm, and a thickness difference between the current collecting region and the electrical connection region is between 0.1 mm and 0.3 mm.

20. A battery module, comprising a battery as claimed in any of claims 11 to 19.
